# EUROPEAN PATENT APPLICATION

(11) **EP 1 605 566 A2**
(43) Date of publication of application: **14.12.2005**
(21) Application number: 05291259.9
(22) Date of filing: 10.06.2005
(51) Int. Cl.: H02G 3/00

(54) **Unified wired and wireless lan access wall plate**

(30) Priority: 11.06.2004 US 866347; 08.07.2004 US 888695
(71) Applicant: Extreme Networks, Santa Clara, CA 95051 (US)
(72) Inventor: Yang, James, San Jose, California 95131 (US); Jain, Vipin, Santa Clara, California 95054 (US); Kline, Brian, Fremont, California 94539 (US)
(74) Representative: Texier, Christian

(57) **Abstract**

A system and method are described for a unified wired and wireless access point device. In one embodiment, the device includes an access point coupled with a local network via a cable extending from the local network to the access point. The access point having a size and shape such that it is disposed inside an interior cavity of a housing of the device. The housing is capable of being mounted to a surface such that the access point resides outside of the surface.

## Description

### CROSS REFERENCE TO RELATED APPLICATION

This application is a continuation of U.S. Application Serial No. 10/866,347, filed June 12,2004, and claims priority thereof.

### BACKGROUND

### Field of the Invention

Embodiments of this invention relate generally to local area networks (LANs). More particularly, an embodiment relates to a system and method for providing a unified wired and wireless LAN access wall plate.

### Description of the Related Art

In addition to the mainstay of mobile communication devices, wireless connectivity is now making inroads in other networking environments, such as enterprise networks, where wireless networking can provide a more flexible and lower cost alternative to the installation of hard-wired networking infrastructure. Wireless connectivity may be found in a variety of networking environments, including personal area networks (PAN), local area networks (LAN), and even in wide area networks (WAN). A number of wireless networking technologies have been developed, including Bluetooth™, the wireless networking technologies defined in the IEEE (Institute of Electrical and Electronics Engineers) 802.11 family of specifications (often referred to as "Wi-Fi"), and the General Packet Radio Service (GPRS). In addition to traditional networking, wireless connectivity is enabling new applications that were previously not feasible in many conventional hard-wire networks, including asset tracking, patient tracking and care, equipment scheduling, as well as others.

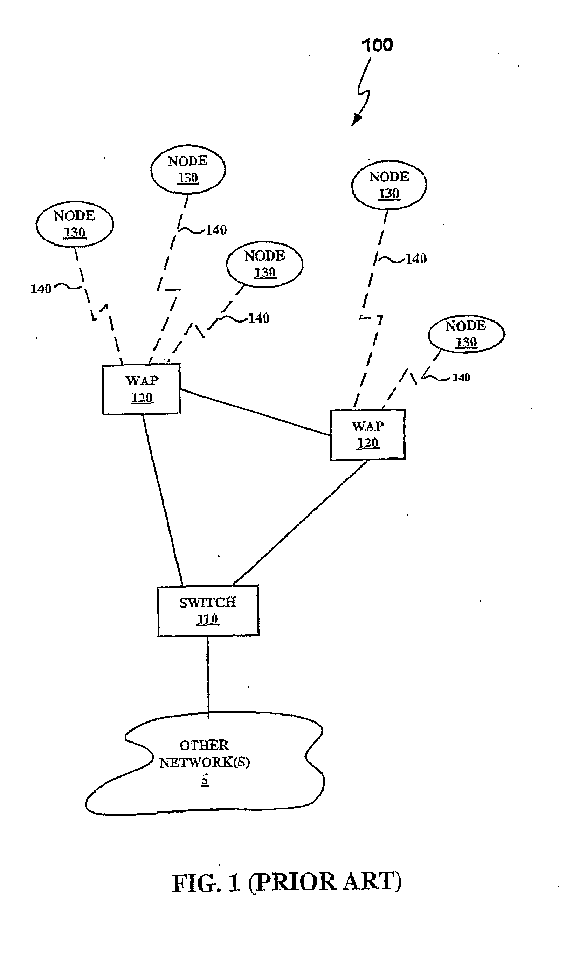

An example of a typical wireless network 100 is illustrated in **Figure 1.** The wireless network 100 illustrated in **Figure 1** may comprise, for example, a corporate enterprise network or other LAN. With reference to this figure, the wireless network 100 includes one or more wireless access points (WAPs) 120. In some types of networks, each of these wireless access points 120 is coupled with a switching device 110. Switching device 110 represents any of a number of well-known devices for routing packets (or calls, frames, etc.) in a network. The switching device 110 may, in turn, be coupled with another network 5 (e.g., the Internet and/or another enterprise network or LAN). One or more nodes 130 may establish a wireless connection 140 with one of the wireless access points 120. A node 130 may comprise any addressable device (e.g., a server, a desktop computer, a laptop computer, a hand-held computing device, an Internet Protocol telephone, a network appliance, and the like), as well as peripheral device such as a printer.

The wireless access points 120 provide access to the network 100 for a node 130 via any suitable wireless mode of communication. By way of example, a connection between a wireless access point 120 and any node 130 may be compatible with any one of the wireless networking technologies defined in the IEEE 802.11 set of specifications, including IEEE 802.11a, IEEE 802.11b, and IEEE 802.11g or with Bluetooth. The IEEE 802.11b standard (and IEEE 802.11g) defines wireless services over the 2.4 GHz band that spans a frequency range of 2.4 to 2.4835 GHz, whereas IEEE 802.11a defines wireless services over a number of bands in the 5 GHz frequency range, including 5.15 to 5.25 GHz, 5.25 to 5.35 GHz, 5.47 to 5.725 GHz, and 5.725 to 5.825 GHz, etc. Bluetooth is a short range, low power radio technology that supports both voice and data applications, and this technology provides frequency-hopping spread spectrum (FHSS) radio connections over multiple channels in the 2.4 GHz radio band (more precisely, in the 2.4 to 2.4835 GHz band). To communicate with the nodes 130, each of the wireless access points 120 includes one or more antennas, each antenna (either alone or in combination with other antennas) being adapted to provide one (or more) of the previously described modes of wireless communication.

To implement a wireless network, a site survey may initially be done to map out the radio frequency (RF) environment, such that optimum locations can be identified for wireless access points that will provide the desired coverage. In a typical enterprise network, the wireless access points are installed in a variety of locations and configurations, such as, for example, horizontally mounted on a desk, vertically mounted on a wall or other structure, or upside-down mounted on a ceiling. These locations are, however, usually visible, and these visible wireless access points may be aesthetically displeasing in an office environment. Often times, aesthetic issues can govern positioning of the WAPs as much as engineering concerns. Also, once the wireless network has been mapped out, a fair amount of labor is necessary to install the wireless access points, and frequently the installer has to route networking cables and power connections to the location of each wireless access point, as well as install mounting brackets for these devices.

In a typical enterprise environment, wired Ethernet wall jacks are commonly distributed throughout a business office area. Leveraging the wired LAN (WLAN) infrastructure (e.g., cables and wall jacks) in enterprises WLAN deployment can significantly simplify WLAN installation while lowering the deployment costs. WLAN is becoming increasingly popular and has emerged as the technology of choice to provide coverage and capacity at enterprise campuses, branch offices, homes, coffee shops, and other places where wired networks either are not feasible or are cumbersome to use. Wireless technology is also enabling a new set of applications (e.g., wireless voice over IP telephony, asset tracking, patient care, and equipment scheduling) in many such environments. To satisfy these evolving needs, professionals, like information technology (IT) managers, have to survey the site and map out a network plan to identify the suitable location for WLAN access points to provide the required coverage and capacity.

The suitable location selection criteria include not only radio frequency (RF) coverage requirements, but also aesthetic considerations. For example, access points that are mounted on the wall or from the ceiling are visible, which can be a problem when they clash with the office or home décor. In a typical enterprise environment, this could also result in dealing with a variety of approval processes involving local codes, building facility and safety, and IT groups. Stated differently, aesthetic issues can govern positioning issues as much as engineering issues. Once a site has been selected and approved, there may still be other requirements to satisfy, such as needing labor to install access points for installing brackets, routing cables for the network, and providing power connections to the new access point location.

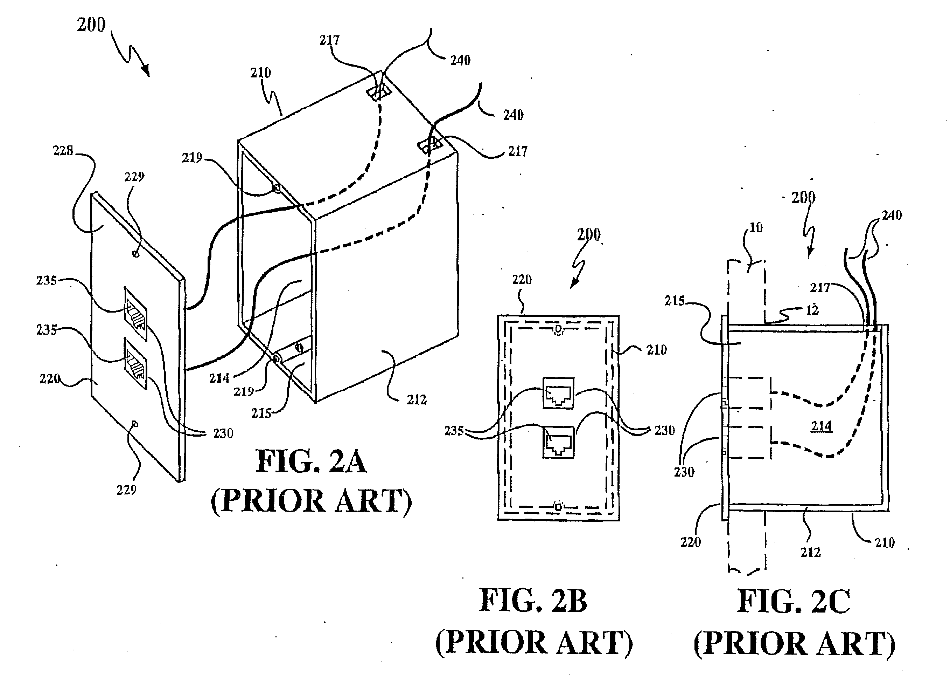

To simplify WLAN and lower the implementation costs, the concept of leveraging the existing wired LAN infrastructure for enterprise WLAN deployment was introduced. Ethernet wall jacks are now commonly used in enterprise environments, such as business office areas. **Figures 2A-2C** illustrates an example of a network connection point installation 200 comprises a junction box 210 that has been secured within a hole 12 extending into a wall 10 (wall 10 is shown in dashed line in **Figure 2C**). In addition to walls, these junction boxes are routinely mounted on ceilings, posts, partitions, floors, as well as other building structures. The junction box 210 is typically secured to a wall stud (or other structure) using nails or other suitable fasteners. The junction box 210 comprises a generally rectangular shaped housing 212 defining an interior cavity 214 and having an opening 215. A cover plate 220 is secured to the junction box 210. Cover plate 220 is attached to the junction box 210 using one or more threaded fasteners (e.g., screws or other suitable fasteners) that are inserted through holes 229 in cover plate 220 and secured within mating threaded holes 219 in junction box 210. One or more network jacks 230 (e.g., Ethernet jacks) are mounted on the cover plate 220, each network jack 230 having a socket 235 that is accessible from a front face 228 of the cover plate, wherein the socket 235 is adapted to receive a mating cable connector (e.g., an RJ45 connector). Coupled with each of the network jacks 230 is a cable 240 (e.g., an Ethernet cable). The cables 240 are disposed within the wall 10 (or ceiling, post, partition, floor, or other structure) and are routed toward the junction box 210. Each cable 240 extends through an aperture 217 in the housing 212 and into the interior cavity 214 of junction box 210.

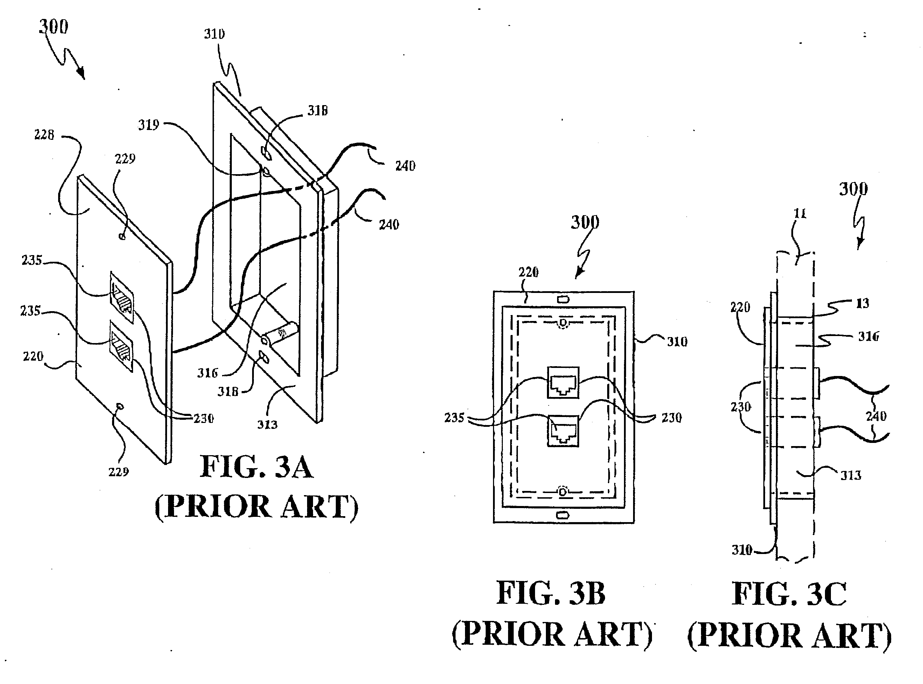

Another example of a conventional wired network connection point installation 300 is illustrated in **Figures 3A-3C.** The installation 300 of **Figures 3A-3C** is similar to that shown in **Figures 2A-2C;** however, to simplify the installation, a mounting bracket 310 has replaced the junction box 210. The mounting bracket 310 is mounted within a hole 13 in wall 11, and the mounting bracket 310 comprises a frame 313 that extends into this hole 13, wherein the frame 313 defines an opening 316. One or more suitable fasteners (e.g., screws and nails) inserted through apertures 318 in frame 313 secure the mounting bracket 310 to the wall 11 (wall 11 being shown in dashed line **in Figure 3C).** The cover plate 220 is then secured to the mounting bracket 310 (e.g., using one or more threaded fasteners extending through the cover plate holes 229 and into mating threaded holes 319 in frame 313). When the cover plate 220 is attached to the mounting bracket 310, the network jacks 230 on cover plate 220 extend through the opening 316, and each network jack 230 is coupled with a network cable 240 disposed within the wall 11 and routed toward the opening 316 in mounting bracket 310.

The network connection point installations 200, 300 depicted in **Figures 2A-2C and 3A-3C,** respectively, are commonly found in offices and other enterprise networks. In modem buildings, such network installations 200, 300 have become nearly ubiquitous as the computers for which they provide network connectivity. The components that make up these installations - e.g., junction box 210 or mounting bracket 310, cover plate 220, network jacks 230, and cables 240 - are readily available in a variety of standard sizes and configurations, and these components are generally low in cost and easy to install.

To address some of the problems with conventional WLAN deployment discussed previously, socket access point (socket AP), powered by power over Ethernet (POE), was introduced by Extreme Networks®. The socket AP is a wired and wireless LAN access point, and was proposed to replace the typical Ethernet wall jack and to add to the environment décor, to allow the installer to pick sites solely on radio frequency (RF) coverage considerations, and to further reduce cabling, material, and labor costs associated with installation. However, even with the introduction of the socket AP, many implementation and architectural issues still remain.

For example, one issue with the conventional approach (e.g., socket AP) is that the circuitry is place inside the wall that can lead to potential architectural and implementation complexities. Some of the architectural complexities include insufficient heat sinking, cumbersome installation, high cost, poor manufacturability, and limited deployment. With regard to insufficient heat sinking, a typical WLAN access point being entirely inside the wall results in poor heat conduction, further resulting in access point performance degradation, shorter life, additional costs, and, in some cases, building safety problems and/or violations.

The installation of such devices is relatively cumbersome, as it requires reconnecting with existing building Ethernet/telephone jacks to create network connections to the access point. The reconnection may also require cutting and modifying of the wall opening to fit the access point, which typically requires professional installers with special skills. Also, to fit the entire WLAN access point with antennas and POE circuitries into a small space confined by the junction box, a design with multiple circuit boards arranged in three dimensions is unavoidable. Such complex structure is expensive and causes poor manufacturing and testability. With regard to limited deployment, the conventional WLAN access point is primarily designed for wall jack deployment and is inappropriate for traditional wall mount or ceiling mount installation, which requires cutting and modifying of the wall or ceiling.

### SUMMARY

A system and method are described for a unified wired and wireless access point device having a combination of a wired access point and a wireless access point. In one embodiment, the device includes an access point coupled with a local network via a cable extending from the local network to the access point. The access point having a size and shape such that it is disposed inside an interior cavity of a housing of the device.

In one embodiment, the housing encasing the access point as well as related circuitry is capable of being mounted to the surface (e.g., wall, ceiling) such that the access point and the circuitry remains outside (e.g., in front) of the wall. In one embodiment, the unified access point device is used as a WLAN access point and, in another embodiment, the unified access point device is used as a combined wired and wireless LAN wall plate access point.

### BRIEF DESCRIPTION OF THE DRAWINGS

The appended claims set forth the features of the invention with particularity. The embodiments of the invention, together with its advantages, may be best understood from the following detailed description taken in conjunction with the accompanying drawings in which:

**Figure 1** is a block diagram illustrating a prior art wireless network;

**Figures 2A-2C** are block diagrams illustrating a prior art hard-wire network connection point;

**Figure 3A-3C** are block diagrams illustrating a prior art hard-wire network connection point;

**Figure 4A-4B** are block diagrams illustrating an embodiment of a unified wired and wireless LAN access wall plate structure;

**Figure 5A-5B** are block diagrams illustrating an embodiment of a wired and wireless LAN access wall plate installation of a unified wired and wireless LAN access wall plate;

**Figure 6A-6E** are block diagrams illustrating an embodiment of a wireless LAN access wall plate installation of a unified wired and wireless LAN access wall plate;

**Figure 7** is a block diagram illustrating an embodiment of the wireless LAN portion of a unified LAN access wall plate system;

**Figure 8** is a block diagram illustrating an embodiment of a circuit board arrangement of a unified LAN access wall plate system;

**Figure 9** is a block diagram illustrating an embodiment of assembly architecture of a unified LAN access wall plate system; and

**Figure 10** is a flow diagram illustrating an embodiment of a process for installing a unified LAN access wall plate system.

### DETAILED DESCRIPTION

Described below is a system and method for a unified wired and wireless access point wall plate. Throughout the description, for the purposes of explanation, numerous specific details are set forth in order to provide a thorough understanding of the embodiments of the present invention. It will be apparent, however, to one skilled in the art that the present invention may be practiced without some of these specific details. In other instances, well-known structures and devices are shown in block diagram form to avoid obscuring the underlying principles of the present invention.

In the following description, numerous specific details such as logic implementations, opcodes, resource partitioning, resource sharing, and resource duplication implementations, types and interrelationships of system components, and logic partitioning/integration choices may be set forth in order to provide a more thorough understanding of various embodiments of the present invention. It will be appreciated, however, to one skilled in the art that the embodiments of the present invention may be practiced without such specific details, based on the disclosure provided. In other instances, control structures, gate level circuits and full software instruction sequences have not been shown in detail in order not to obscure the invention. Those of ordinary skill in the art, with the included descriptions, will be able to implement appropriate functionality without undue experimentation.

Various embodiments of the present invention will be described below. The various embodiments may be performed by hardware components or may be embodied in machine-executable instructions, which may be used to cause a general-purpose or special-purpose processor or a machine or logic circuits Programmed with the instructions to perform the various embodiments. Alternatively, the various embodiments may be performed by a combination of hardware and software.

Various embodiments of the present invention may be provided as a computer program product, which may include a machine-readable medium having stored thereon instructions, which may be used to program a computer (or other electronic devices) to perform a process according to various embodiments of the present invention. The machine-readable medium may include, but is not limited to, floppy diskette, optical disk, compact disk-read-only memory (CD-ROM), magneto-optical disk, read-only memory (ROM) random access memory (RAM), erasable programmable read-only memory (EPROM), electrically erasable programmable read-only memory (EEPROM), magnetic or optical card, flash memory, or another type of media/machine-readable medium suitable for storing electronic instructions. Moreover, various embodiments of the present invention may also be downloaded as a computer program product, wherein the program may be transferred from a remote computer to a requesting computer by way of data signals embodied in a carrier wave or other propagation medium via a communication link (e.g., a modem or network connection).

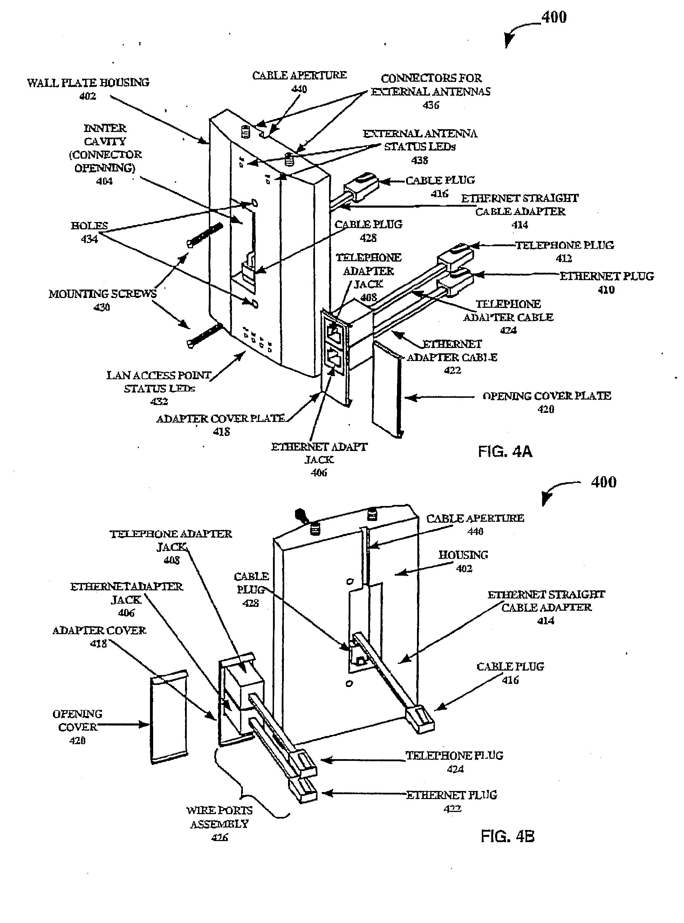

**Figures 4A-4B** are block diagrams illustrating an embodiment of a unified wired and wireless LAN access wall plate (unified wall plate) structure 400. A front-side view of the unified wall plate structure 400 is illustrated in **Figure 4A.** A back-side view of the unified wall plate structure 400 is illustrated in **Figure 4B.**

Referring now to **Figure 4A,** the illustrated embodiment of the unified wall plate structure 400 includes a rectangular-shaped wall plate housing 402. The housing 402 is used to house a wall plate system that includes a WLAN access point system, and a combination of wired LAN-and telephone wall plate access points, with an Ethernet jack (e.g., RJ-45 jack) built-in for Ethernet and POE connections to a network switch, where the wired access ports (Ethernet and/or telephone) may be located in an internal cavity or opening 404. The housing 402 may include various hard-wire network connection points, as well as electrical plugs, light switches, jacks, and the like. The housing 402 may be fabricated from plastic and/or metal, but may also be constructed from other materials and composites. The housing 402 may be of any suitable size and type. In one embodiment, the housing 402 is further to encase various electrical components (e.g., integrated circuit chips, circuit boards, wiring, and discrete electrical devices, such as capacitors) that make up the wired/wireless access point.

The opening 404 is provided for adapting "pass through" wired LAN and telephone connector jacks 406-408 and plugs 410-412 to be connected with the main network (e.g., building network). In one embodiment, the pass through wired LAN/telephone ports assembly (wired ports assembly) 426 includes the adapter cover 418, an Ethernet adapter cable (dongle-1) 422, and a telephone adapter cable (dongle-2) 424. Dongle-1 422 may include a Category-5 (CAT-5) cable 422 having a modular Ethernet adapter jack (e.g.; RJ-45 jack) (Ethernet jack) 406 on one end of the cable 422 and a plug (e.g., RJ-45 plug) (Ethernet plug) 410 on the other end. Dongle-2 424 includes a telephone cable 424 with a modular telephone adapter jack (e.g., RJ-11 jack) 408 on one end of the cable 424 and a plug (e.g., RJ-11 plug) (telephone plug) 412 on the other end. In one embodiment, the adapter cover 418, dongle-1 422, and dongle-2 424 may be, directly or indirectly, coupled with each other into a wired ports assembly 426. It is contemplated that the wired ports assembly 426 is not limited to two dongles 422-424 and that any number of Ethernet and telephone jacks and plugs may be used as desired in certain applications or as supported by the local network. Furthermore, any type of standard industry cables, jacks, and plugs may be used.

The adapter cover 418 is coupled with the Ethernet and telephone jacks 406-408 to secure the jacks 406-408 into the opening 404 of the housing 402. The adapter cover 418 is secured to or snapped onto the opening 404 using any suitable connection device or method (e.g., screws, rivets, Velcro, threads, clamps, and clips). The adapter cover 418 may be constructed from any suitable material, including plastics, metals, composite materials, and the like.

The unified wall plate structure 400 may also include mounting screws 430 to install, mount, deploy, and secure the housing 402 of the unified wall plate on a wall (e.g., ceiling, gypsum board, ceiling joist, support beam, floor joist, and other covering disposed over a series of wall studs or other framing) by extending the screws into the wall via one or more holes 434. The housing 402 may also be installed using other forms of suitable fasteners, such as nails, clips, clamps, and the like.

In the illustrated embodiment, the unified wall plate structure 400 further includes antenna connectors 436 for external antennas to be installed on the housing 402, if needed or necessary. It is contemplated that any number of connectors 436 may be provided for connecting any number of external antennas. The unified wall plate structure 400 further includes one or more internal antennas and so, the external antennas may be in addition to and to supplement the internal antennas. A set of external antenna status light emitting diodes (antenna LEDs) 438 may be provided to indicate connecting status of external antennas. Another set of LEDs includes WLAN access point status LEDs (access point LEDs) 432 of which, one LED is for indicating the power status (e.g., power on/off), one LED is for Ethernet network connectivity, one LED is for radio operation status, and optionally another LED is for a second radio operation, depending on product configuration and other such factors.

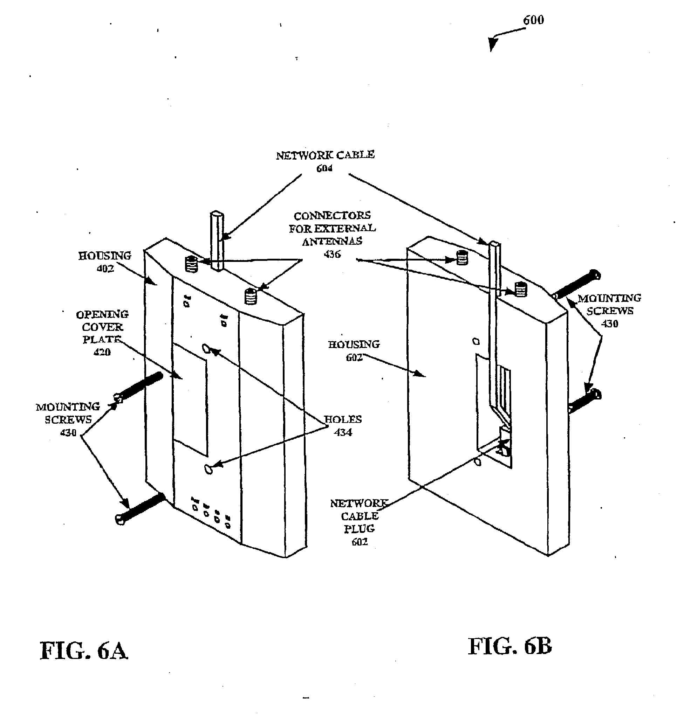

The illustrated embodiment of the unified wall plate structure 400 further includes an opening cover plate (opening cover) 420. In one embodiment, the opening cover 420 may be used for a wireless wall plate installation (as illustrated in **Figures 6A-6B)** that does not require the use of Ethernet and telephone connections for wall or ceiling mount installations. The opening cover 420 is to cover or seal the opening 404 when not in use (e.g., when using the unified wall plate as wireless wall plate) and to prevent the WLAN access point Ethernet and telephone connections from unwanted user access, as it may be required by many IT mangers. The opening cover 420 is secured to or snapped onto the opening 404 using any suitable connection device or method (e.g., screws, rivets, Velcro, threads, clamps, and clips). The adapter cover 420 may be constructed from any suitable material, including plastics, metals, composite materials, and the like.

Referring now to **Figure 4B,** the housing 402 further includes an Ethernet straight cable adapter (straight cable) 414 having cable plugs (e.g., RJ-45 plug) 416, 428 on each end of the straight cable 414, where one plug 428 is coupled to or plugged into the inner wall of the opening 404. In one embodiment, the straight cable 414 is used to connect the Ethernet/POE between the access point of the unified wall plate structure 400 and the local network, such as the local building network.

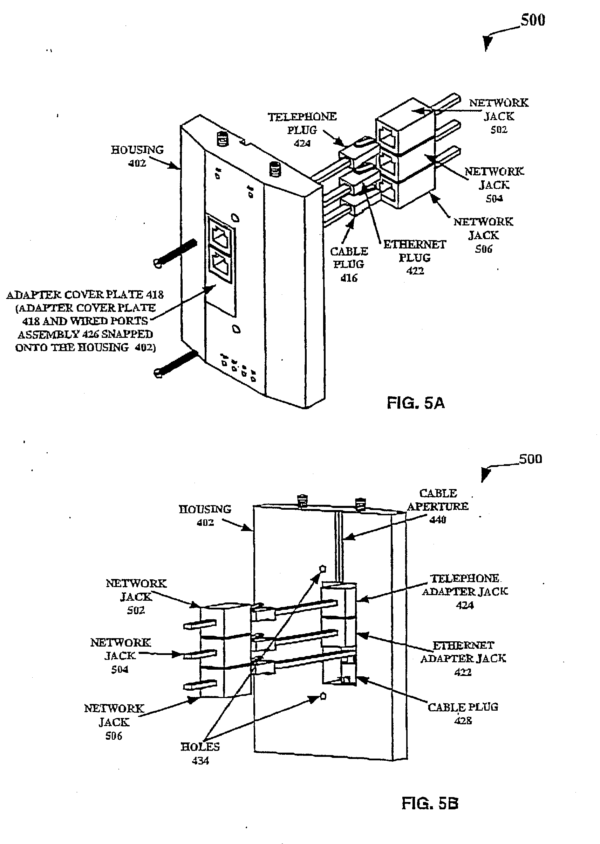

In one embodiment, the unified wall plate includes both the wired and wireless LAN access point capabilities. Stated differently, the unified wall plate structure 400 may be used as combined wired/wireless wall plate **(Figure 5A-5B)** and/or wireless wall plate **(Figures 6A-6B).** The unified wall plate is relatively easy to install, has lower cost, provides robust performance, has small form factor, and offers good manufacturability. Furthermore, the unified wall plate is flexible enough to include both the traditional wall mount and ceiling mount installations. The access point of the unified wall plate can be operated with internal antennas and/or external antennas in a number of combinations and configurations to mitigate multi-path effect and to better control WLAN coverage in various environments (e.g., office environment). In one embodiment, the access point of the unified wall plate is powered by the POE.

**Figures 5A-5B** are block diagrams illustrating an embodiment of a wired and wireless LAN access wall plate installation 500 of a unified wired and wireless LAN access wall plate. A front-side view of the wired and wireless wall plate installation 500 is illustrated in **Figure 5A.** A back-side view of the wired and wireless wall plate installation 500 is illustrated in **Figure 5B.** Those elements discussed with regard to **Figures 4A-4B** are not repeated in the following text.

**Figure 5A** illustrates the adapter cover 418 snapped on the opening 404 of the housing 402 of the unified wall plate. In the illustrated embodiment, the adapter cover 418 is coupled with the Ethernet and telephone jacks 406-408 of the wired ports assembly 426. The unified wall plate is mounted on a wall where a wired Ethernet wall plate exists, the housing of the wall plate is kept outside of the wall and, in other words, the circuitry of WLAN access point, including the Ethernet and telephone jacks 406-408, is also kept outside (e.g., in front) of the wall. In one embodiment, by snapping the adapter cover 418 on the connector opening 404, the wired port assembly 426 is securely locked to the housing 402 from the from through its clicks. This is also to prevent the wired ports assembly 426 from being removed from the front (e.g., user side) once it is installed. The wired ports assembly 426, however, may be removed from back of the housing 402.

The plugs 410-412, 416 of the dongle-1422, the dongle-2 424, and the straight cable 414, respectively, coming out from the assembled access point, are plugged into the building network jacks 502-506 (e.g., RF-45 jack, RF-11 jack), respectively, as illustrated. The plugs 410-412 of dongle-1 (Ethernet cable) 422 and the dongle-2 (telephone cable) 424 may be of a particular shape and/or size such that they are compatible with the local building network jacks 502-504. In another embodiment, if the building network jacks 502-504 are such that they fit the adapter cover plate 418, the two adapter cables 422-424 may not be needed or used. In one embodiment, the dongles 422-424 may provide a universal solution to the Ethernet and telephone cable connection between the wall plate access point and the building network, and may simplify the wall plate access point installation.

The adapter cover 418 is illustrated to cover the opening 404 of the housing 402 and helps hold the wired access point within the interior cavity or opening 404 of the housing 402. The adapter cover 418 is secured to the opening 404 using any suitable connection device or method. The adapter cover may be of any suitable size, and it may be constructed using any suitable material, such as plastics, metals, and composite materials.

Once the cable connections are made, the housing 402 of the unified wall plate having the wall plate access point is mounted on the wall with one or more screws 430 via the one or more corresponding holes 434. The internal cable connections of the unified wall plate of the wired and wireless wall plate installation 500 are unreachable from outside once the installation has completed. As with the wired and wireless LAN wail plate installation 500, the internal cable connections of the wireless LAN wall plate of the wireless wall plate installation 600 (**Figure 6A-6B)** may also be unreachable from outside. Also, for example, since the wired telephone line 424 is passed through the wall plate access point without going through the circuit board, there may not be a need to obtain certification for telephone compliance, and fewer Ethernet lines going through the circuit board may reduce the EMI emission, resulting in lower product cost.
Furthermore, the wall plate access point is made in small form factor and is thin and the obstruction to the office décor is minimal, if any. Sufficient heat sinking is also obtained because the entire access port unit (e.g., housing 402) is mounted outside the wall with better air-cooling.

Now referring to **Figure 5B,** it illustrates the backside of the wired and wireless wall plate installation 500. In the illustrated embodiment, the network connections as illustrated where plugs 410-412, 416 of the dongle-1422, the dongle-2 424, and the straight cable 414**,** respectively, coming out from the assembled access point, are plugged into the local network jacks 502-506, respectively. In one embodiment, the network connections are not only behind the housing 402, but also behind the wall, keeping only the Ethernet cable 422, the telephone cable 424, and the straight cable 414 inside the wall. Furthermore, the housing 402 encases various electrical components (e.g., integrated circuit chips, circuit boards, wirings, and discrete electrical devices, such as capacitors) that are also kept outside (e.g., in front) of the wall. Such a setting keeps the heat emitting components of the wired and wireless wall plate installation 500 outside of the wall and thus, additional heat sinking is not needed.

**Figure 6A-6B** are block diagrams illustrating an embodiment of a wireless LAN access wall plate (wireless wall plate) installation 600 of a unified wired and wireless LAN access wall plate. A front-side view of the wireless wall plate installation 600 is illustrated in **Figure 6A.** A back-side view of the wireless wall plate installation 600 is illustrated in **Figure 6B.** Those elements discussed with regard to **Figures 4A-4B and 5A-5B** are not repeated in the following text.

In the illustrated embodiment of **Figure 6A**, the wireless wall plate installation 600 includes a WLAN deployment/re-deployment of the wall plate access point architecture. As with the unified wall plate, the wireless wall plate may also be mounted to a wall, under or above a ceiling, and the like, without the need for cutting the wall or the ceiling. In one embodiment, a network cable (e.g., CAT-5 cable) 604 from the building network may be attached to the housing 402 and covered underneath the access point housing, keeping the Ethernet connection secured with no need for an additional protection cover. The network cable 604 slides into a cable opening 440 on the back of the housing 402 for easy installation and cover.

Secured to the housing 402 is the opening cover 420 to cover the opening 404 of the housing 402, which encloses the wireless access point within the opening (or interior cavity) 404 of the junction box housing 402. The opening cover 420 is secured to the housing 402 using any suitable connection device or method. The opening cover 420 may be of any suitable size and constructed from any suitable material, including plastics, metals, and composite materials. In one embodiment, the opening cover 420 may be secured or snapped on to the opening 404 of the housing 402 using any suitable connecting device or method, including clicks, fasteners (e.g., screws, rivets, and Velcro) or adhesives (e.g., epoxies).

The housing 402 may be used to encase various electrical components (e.g., integrated circuit chips, circuit boards, discrete electrical devices such as capacitors, wiring, etc.) that make up the wireless access point. It should be understood, however, that the wireless access point may comprise a circuit board having various electrical components disposed thereon, wherein this circuit board assembly is simply installed in the housing 402.

Coupled with the housing 402 are one or more connectors 436 for adding one or more external antennas. In one embodiment, the external antennas, when installed, are coupled with the wireless access point, located inside the housing 402, via the connectors 436 extending out of the housing 402. In another embodiment, the wireless access point is further coupled with one or more internal antennas residing inside the housing 402. The internal antennas may be part of the base circuitry of the wireless wall plate or may include a separate device that is connected to the wireless access point. An antenna, internal or external, includes any suitable antenna that has been adapted for any desired mode (or modes) of wireless communication. For example, the antenna may be compatible with the IEEE 802.11a, IEEE 802.11b, and IEEE 802.11g specifications, or General Packet Radio Service (GPRS).

Referring now to **Figure 6B,** in one embodiment, a network plug (e.g., CAT-5 plug) 602 from the local (building) network may be plugged into the access point of the wireless wall plate. Opening cover 420 is used to cover the connector opening 404 in the unit housing 402 to protect the internal Ethernet/POE connections. The housing 402 having a wireless access point may then be mounted on the wall or under/above the ceiling with one or more screws 430 either directly or through mounting brackets or holes 434.

Disposed within the interior cavity or opening 404 of housing 402, covered by the opening cover 420, is a wireless access point connected with the building network via a network cable 604 having a network plug 602. The network plug 602 is connected with or plugged into the access point of the wireless wall plate. Wireless access point is intended to represent any one of a wide array of such devices that provide a computing node with wireless access to a network (e.g., the network 100 of **Figure 1**).

The wireless access point may provide wireless network access using any suitable mode of wireless communication. By way of example, the wireless access point may be adapted to provide wireless communications compatible with the IEEE 802.11b and the IEEE 802.11g standards (e.g., the 2.4 GHz band), or the IEEE 802.11a standard (e.g., the 5 GHz band), and the Bluetooth™ specification (e.g., the 2.4 GHz band). *See,* e.g., IEEE 802.11a-1999 Standard, *Supplement to IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - High-Speed Physical Layer in the 5 GHz Band* (IEEE 802.11a), IEEE 802.11b-1999 Standard, *Supplement to IEEE Standard for Information Technology - Telecommunications and Information Exchange Between Systems - Local and Metropolitan Area Networks-Specific Requirements-Part 11: Wireless LAN Medium Access Control (MAC) and Physical Layer (PHY) Specifications - Higher-Speed Physical Layer Extension in the 2.4 GHz Band* (IEEE 802.11b), and IEEE 802.11g (Draft) - 2003 Standard, *Further Higher-Speed Physical Layer Extension in the 2.4 GHz Band. See also,* e.g., *Specification of the Bluetooth System: Core,* Vol. 1, Ver. 1.1, February 2001, promulgated by the Bluetooth Special Interest Group (SIG) and available at http://www.bluetooth.com.

It should be understood that the wireless access point may be adapted for use in any other suitable communication mode, such as for use in GPRS compatible communications (see, e.g., Permanent Reference Document (PRD) IR.33, *GPRS Roaming Guidelines*, Ver. 3.1.0, April 2000, and PRD IR.40, *Guidelines for Ipv4 Addressing and AS Numbering for GPRS Network Infrastructure and Mobile Terminals,* Ver. 3.1.0, September 2001, both available from the GSM™ Association at http://www.gsmworld.com) or European HiperLAN compatible communications (see, e.g., ETSI ETS 300,652 ed. 1, *Radio Equipment and Systems (RES); High Performance Radio Local Area Network (HIPERLAN)-Type 1; Function Specification*, 1996, as well as other specifications in this family promulgated by the European Telecommunications Standards Institute (ETSI) and available at http://www.etsi.org).

In one embodiment, the network cable 604 is coupled with the wireless access point via the network plug 602. The network cable 604 is disposed within a wall (or ceiling, post, partition, floor, or other structure) and is routed toward the wireless wall plate and is guided into the aperture 440 behind the housing 402. The end of the network cable 604 having the network plug 602 extends through the cable aperture 440 and into the opening 404 of the housing 402, where the network plug 602 is plugged into the wireless access point residing in the housing 402. The network cable 604 includes any suitable type of networking cable, such as a CAT-5 cable compatible with the POE standard (or another proprietary or standard method to transmit low-voltage power to a connected device).

The network cable 604 may further include an electrical cable (e.g., copper wire). *See* IEEE 802.3af Draft Specification, *Supplement to CSMA*/*CD Access Method and Physical Layer Specification - Data Terminal Equipment (DTE) Power Via Media Dependent Interface (MDI),* 2002 (also known as Power Over Ethernet). The POE standard requires that a DC voltage (e.g., 48 volts) be added to the two wire pairs on a CAT-5 cable (which includes four two-wire pairs, or eight wires) to eliminate the need for low power devices to have a separate power source. Stated differently, the network cable 604, in addition to carrying data, can be used to deliver power to the wireless access point to, for example, eliminate the need to route a separate power line to the housing 402. It is contemplated that the wireless access point is not limited to Ethernet applications and, further, that the wireless access point may be adapted for use with any type of network architecture or standard, such as Asynchronous Transfer Mode (ATM), Synchronous Optical Network (SONET), and the like, and that alternative methods to POE may be employed to deliver power.

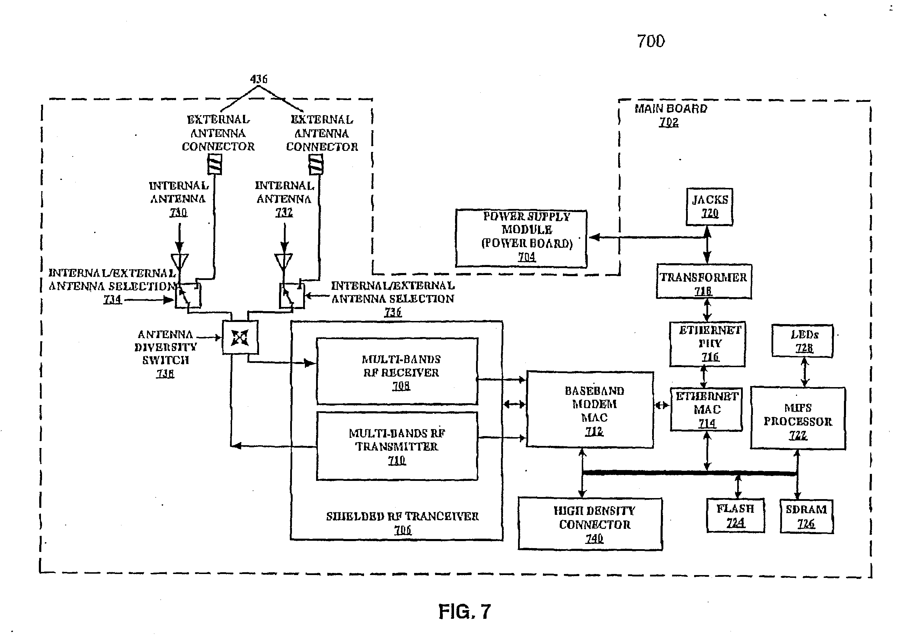

**Figure 7** is a block diagram illustrating an embodiment of the wireless LAN portion of a unified LAN access wall plate system (system) 700. The illustrated embodiment of the system 700 includes a wireless LAN access point (of a unified wall plate) complying with IEEE 802.11a, IEEE 802.11b, and/or IEEE 802.111g standards. The system 700 is powered by standard IEEE 802.3af power over Ethernet (POE) from a network switch through the wired LAN.

In the illustrated embodiment, the system includes a main board 702 coupled with a power supply modular board (power board) 704. The power board 704 includes a POE-based IEEE 802.3af standard compliant switching power supply module. The IEEE 802.3af is regarded as an IEEE standard for powering network devices via an Ethernet cable. It typically provides 48 volts over 4 conductors (Mode A or Mode B) or 8 conductors (Mode A plus Mode B) of a standard Ethernet cable such as the CAT-5 cable.

The main board 702 further includes a shielded RF transceiver 706. The transceiver 706 may include a multi-band transceiver, such as 2.4 GHz and 5 GHz bands. The transceiver 706 may contain a pair of transmitter 710 and receiver 708 for single channel operation, or it may contain two pairs of transmitters 710 and receivers 708 for two channels, concurrent operation, depending on the product configuration. The baseband modem (e.g., IEEE 802.11a/b/g modem) of the baseband modem/MAC block 712 may include either a single logical element (for a single channel operation) or two or more logical elements (for a dual or multiple channel concurrent operation). Additionally, the baseband modem/MAC block 712 includes a medium access controller (MAC) (e.g., IEEE 802.11a/b/g MAC) including a single logical element (for a single channel operation) or two or more logical elements (for a dual or multiple channel concurrent operation). The term baseband refers to transmission of digital pulses without any additional modulation. The term baseband is typically used to refer to the pure digital side of a circuit when the other side is broadband or frequency based, which means that the signal is modulated. For example, "RF to baseband" means converting the modulated RF signal from the analog or digital cellphone tower to pure digital for further processing.

In one embodiment, the main board 702 further includes an Ethernet MAC 714, an Ethernet physical layer (PHY) 716, a transformer 718, and a jack 720. The Ethernet PHY 716 may be used to provide transmission of bits over the network medium. The transformer 718 is used to change alternative current (AC) voltage or to change impedance. Typically, a transformer 718 is made of steel laminations wrapped with two coils of wire, with the coil ratio deriving the voltage or the impedance change. In the Ethernet application, the transformer 718 may be used for impedance change for the data. It may also be used for DC isolation between the DC power source in the network side and a power device (PD), e.g. a wireless LAN access point, for safety purposes. The impedance ratio of the input and the output of a transformer is equal to square of the coil ratio. For example, if the input coil has 100 windings, and the output has 200 windings, then input impedance of 25 ohm, for example, is changed to 100 ohms at the output.
Also, to create direct current (DC) power to the PD, the 48-volt DC power from the POE is converted to the necessary voltages for the PD through a DC-DC voltage converter which resides in the power supply module 704. The jack 720 may include an Ethernet jack, such as the modular RI-45 Ethernet Jack 406 (as in **Figure 4A**).

In one embodiment, the main board 702 further includes a processor 722, a flash memory 724, and Synchronous Dynamic RAM (SDRAM) 726, and LEDs 728. The processor 722 may be a MIPS processor or other types of processor. The flash memory 724 includes an erasable, rewritable memory chip that holds its content without power. The flash memory 724 is also called flash RAM or flash ROM and is widely used in a myriad of consumer and industrial products. Flash memory 724 is packaged as stand-alone chips for printed circuit board mounting as well as in a variety of removable modules, including digital memory cards (e.g., CompactFlash, Smart Media, and Memory Stick). The SDRAM 726 is based on standard dynamic RAM chips, but has sophisticated features that make them considerably faster. For example, the SDRAM 726 is fast enough to be synchronized with the Computer Processor Unit (CPU) clock to eliminate wait states. Also, SDRAM 726 is divided into two cell blocks, while the data is interleaved between the two so that while a bit in one block is being accessed, the bit in the other block is being prepared for access. The LEDs 728 may include two or more sets of LEDs. The first set of LEDs may include one or more LEDs to indicate connection status for external antennas, Another set of LEDs may include one or more LEDs to indicate WLAN access port status including: power on/off status, Ethernet network connectivity, radio operation status, and, optionally, another one for a second radio operation, depending on product configuration.

The two internal antennas 730-732, including multi-band antennas (e.g., 2.4 GHz and 5 GHz), are provided for spatial diversity and better signal coverage. The internal antennas 730-732 are embedded on the main board 702. The system 700 further includes connectors 436 for one or more external antennas. The connectors 436 may include reverse polarity SMA female connectors for connecting external antennas to acquire improved signal coverage, particularly if the unified wall plate is in a corner or at the low level of the room. It is contemplated that any number of internal antennas 730-732 and external antennas may be added to system 700 as desired or necessitated.

The system 700 further includes switches (e.g., RF switches) 734-736 to facilitate the selection of any combination of the internal antennas 730-732 and the external antennas. An antenna diversity switch 738 is used to select an antenna to transmit and/or receive diversity for single logical channel operation or two such switches for dual logical channel concurrent operation. The main board 702 further includes a high density connector 740 to bundle any number of connectors (e.g., general purpose input/output (GPIO), Joint Test Action Group (JTAG), and Console Port) into this one high density connector 740 for system debugging during development and for failure analysis.

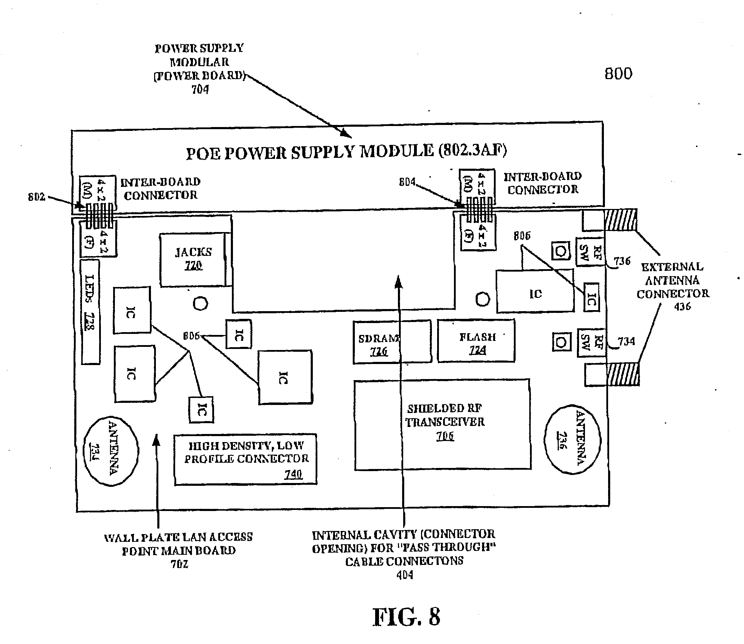

**Figure 8** is a block diagram illustrating an embodiment of a circuit board arrangement of a unified LAN access wall plate system (system) 800. The system 800 of the illustrated embodiment is built with two circuit boards inside the WLAN access point housing. The two circuit boards include a main board 702 and a power board 704 (as also illustrated in **Figure 7**). The main board 702 contains various circuits to support the wired/wireless LAN access port to facilitate the various functions and embodiments (as disclosed here). The power supply 704 is used to supply power.

The RF transceiver 706 residing on the main board 702 may be shielded with a metallic can that is attached or soldered to the main board 702 to reduce unwanted EMI. The main board 702 is directly or indirectly connected to the power board 704 through one or more on-board or inter-board connectors 802-804. The power board 704 supports the IEEE 802.3af POE standard and provides the voltages needed by the main board 702.

In one embodiment, the separating of the main board 702 and the power board 704 helps reduce the cost of materials and provides better quality control, easy product debugging, simpler post sale support services, improved manufacturability, and increased product quality. In one embodiment, a single-sided component method or a double-sided component population method, or a combination of these two methods, may be applied to build circuit boards on the main board 702, depending on the product focus, configuration, needs, and necessities. The single sided population method may offer lower material and production costs, better manufacturability, and better product quality, but it may necessitate a larger circuit board. The double-sided population method may provide a relatively smaller circuit board size.

The WLAN signal may suffer multi-path interference especially in indoor office environments. To mitigate the multi-path effort for better radio link quality, techniques for obtaining spatial diversity are employed for both the receiver 708 and the transmitter 710 **(Figure 7).** In one embodiment, antenna selection is used to achieve the spatial diversity. Furthermore, WLAN coverage is also determined by the antenna characteristics and location. In one embodiment, any number of internal and external antennas are provided to obtain maximum spatial diversity and coverage. In the illustrated embodiment, two internal antennas (e.g., A1, A2) 730-732 are provided and two additional external antennas (e.g., Ax1, Ax2) may be connected to the wall plate housing using the antenna connectors 436. Any combination of internal antennas 730-732 and external antennas may be used to satisfy various coverage need and requirements. In one embodiment, one or more antennas (e.g., internal antennas 730-732) may be pre-selected for spatial diversity operation via the system control software. In the illustrated embodiment, any of the following combinations of internal antennas 730-732 and external antennas may be used: internal antennas 730-732 only, external antennas only, and combination of internal antennas and external antennas.

The flexible antenna selection allows network planners to pursue greater WLAN network optimization. A combination of antennas may be selected automatically or under software control. The LEDs 728 associated with the external antennas are used to indicate the external antennas' internal connection status. To help reduce the circuit board area, a high density low profile connector 740 is used to bundle a set of connectors, such as test points, GPIO, JTAG, and console port from the embedded processor for external use. A special adapter board may be used to utilize the high density connector port 740 for debugging during development and for failure analysis. It is contemplated that one or more integrated circuit (IC) devices 806 may be installed on the main board 702 to perform a number of these functions.

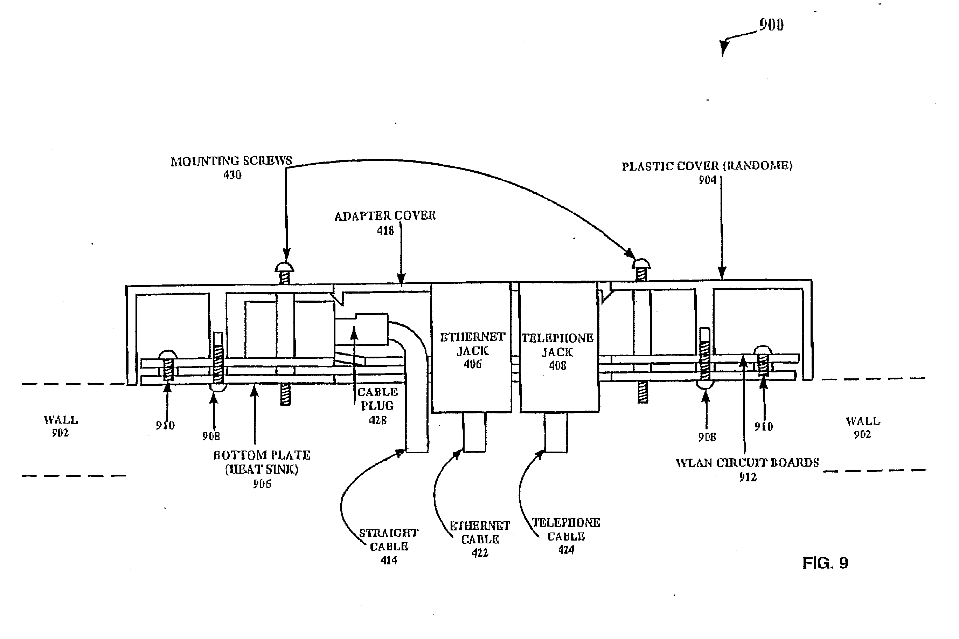

**Figure 9** is a block diagram illustrating an embodiment of assembly architecture of a unified LAN access wall plate system (system) 900. Many of the features described with regard to previous illustrations will not be described in the following text. In the illustrated embodiment, the system 900 includes a set of connector jacks, including an Ethernet jack 406 and a telephone jack 408. The Ethernet jack 406 and the telephone jack 408 are extended into Ethernet cable 422 and telephone cable 424, respectively. The architecture 900 further includes a plug 428 at one end of the straight cable 414 being extended from the building network into the access point of the wall plate.

The system 900 further includes an adapter cover 418 coupled with the connector jacks 406-408 and snapped onto the opening of the housing via clips, clamps, teeth, screws, and the like. In one embodiment, the wall plate or wall plate housing may be secured on a wall 902 (represented by two dotted lines) by securing screws 430 into the wall 902 via cylinder-shaped holes through the housing of the wall plate. In one embodiment, other forms of mounting devices may be used, such as clips, clamps, and the like, and the mounting of the wall plate may not be limited only to walls 902 and may include ceilings, floors, graphite boards, and the like.

In one embodiment, the wall plate or housing of the system 900 is mounted on the wall (or ceiling) 902 such that the wall plate access point and the related circuitry (e.g., Ethernet and telephone jacks 406-408, heat emitting components, and various circuit devices) is kept outside (e.g., in front) of the wall 902. By placing the circuitry outside of the wall 902, many of the potential problems, such as insufficient heat sinking, cumbersome installation, high cost, poor manufacrurability, and limited deployment, are eliminated or diminished. More particularly, for example, by keeping the circuitry outside the wall 902, may of the heat sinking-related problems, such as poor heat conduction, performance degradation, shorter life, additional costs, and, in some cases, building safety problems and/or violations, can be eliminated or reduced to insignificant level.

In one embodiment, the system 900 includes the outer and visible housing that is covered by a radio dome (radome) cover 904 that is made of suitable material, such as plastic, and it is transparent to the RF radiation to and from the internal antennas. Further, the radome cover may be secured to the bottom plate 906 by using screws 908, clips, clamps, glue, and the like. The bottom plate 906 is the hidden part of the system 900 to support the main board and the power board. The WLAN circuit boards 912 (e.g., main board, power board) are secured to the bottom plate 906 via screws 910, or the like. In one embodiment, the bottom plate 906 also serves as a heat sink to absorb excess heat from heat emitting electronic components and devices of the system 900. The bottom plate 906 may be made out of sheet metal (e.g., aluminum), metal casting, plastic, and any other suitable material.

In one embodiment, the wired and wireless LAN access wall plate system 900 may be expanded to include other wired and wireless technologies, such as radio identification (RFID) tracking and motion radar activated video monitoring for enterprise security and asset control. These wireless technologies may be either included in the wired/wireless LAN wall plate, or integrated independently with the wired LAN/telephone ports to form different wall plates that support various functions.

It is appreciated that a lesser or more equipped system than the example described above may be desirable for certain implementations. Therefore, the configuration of system 900 may vary from implementation to implementation depending upon numerous factors, such as price constraints, performance requirements, technological improvements, and/or other circumstances.

It should be noted that, while the embodiments described herein may be performed under the control of a programmed processor, in alternative embodiments, the embodiments may be fully or partially implemented by any programmable or hardcoded logic, such as field programmable gate arrays (FPGAs), TTL logic, or application specific integrated circuits (ASICs). Additionally, the embodiments of the present invention may be performed by any combination of programmed general-purpose computer components and/or custom hardware components. Therefore, nothing disclosed herein should be construed as limiting the various embodiments of the present invention to a particular embodiment wherein the recited embodiments may be performed by a specific combination of hardware components.

For embodiments of a wired/wireless access point installations, methods, and systems having been herein described, those of ordinary skills in the art will appreciate the advantages of the disclosed embodiments. A wireless access point installed in a housing or placed in a wall plate installation utilizing a mounting bracket ― whether located on a wall, ceiling, post, partition, floor, or other building structure, and whether recessed or surface-mounted ― provides improved aesthetics, as simply a cover plate (e.g., opening cover) is visible. For the unified wall plate, the connector jacks may also visible. The site selection for wireless/wireless access points can be based on coverage considerations, without any concerns for aesthetics. By placing the circuitry outside of the wall 902, many of the potential problems, such as insufficient heat sinking, cumbersome installation, high cost, poor manufacturability, and limited deployment, are eliminated or diminished.

Also, because the wireless access point is hidden behind a cover plate, security is enhanced and the wireless access point is less vulnerable to tampering or theft. Installation, which may take advantage of existing construction and wiring and which may require only a few tools, is simplified and labor costs are, therefore, decreased. Furthermore, a substantial space saving can be realized, as the installation places the entire wireless access point inside the space occupied by a standard housing. The disclosed wireless access point installations can also make use of existing hard-wire network connection points and infrastructure, and these installations can be adapted to the POE standard (or similar method), which helps eliminate any need for a separate power source or cable. Further, by incorporating a network jack into the wireless access point installation, both wired and wireless connectivity can be provided.

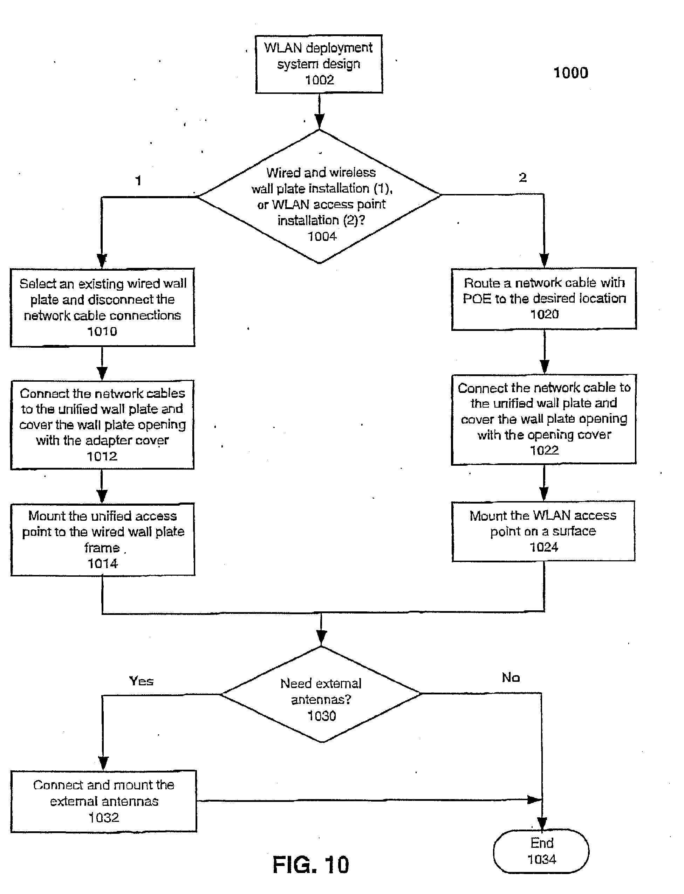

**Figure 10** is a flow diagram illustrating a process for installing a unified LAN access wall plate system. First, at processing block 1002, WLAN deployment system design is initiated. In one embodiment, a unified wall plate installation may include a wired and wireless wall plate installation or a WLAN access point installation, as desired or necessitated. At decision block 1004, a determination is made as to whether the installation is a (1) wired and wireless wall plate installation or a (2) WLAN access point installation. If the installation desired is wired and wireless wall plate installation, an existing wired wall plate is selected, while the network cable connections are disconnected at processing block 1010. The network cables are then connected to the unified wall plate and wall plate opening is covered with the adapter cover at processing block 1012. In one embodiment, the adapter cover may be coupled with the wired ports assembly and snapped onto the opening of the wall plate. At processing block 1014, the unified access point is mounted to the wired wall plate frame.

In one embodiment, at the decision block 1030, a determination is made as to whether one or more external antennas are needed. The antennas may include external antennas for providing increased spatial diversity by supplementing the already embedded internal antennas. The internal antennas may be prepackaged or pre-coupled with the wireless access point within the housing. If the external antennas are to be added, they are connected and mounted onto the housing using the connectors provided for the antennas at processing block 1032. The process is then completed and ends at terminal block 1034. If the extetnal antennas are not to be added (or if already connected), the process is completed and ends at termination block 1034.

Referring back to decision block 1004, if the determination is made in favor of the WLAN access point installation, a network cable is routed with POE to the desired location at processing block 1020. The network cable may include a network cable disposed within a wall or ceiling, post, partition, floor, or other structure, and the desired location may be an appropriate location within the united wall plate, such as the access point. The network cable is then connected to the unified wall plate, while the wall plate opening is covered with the opening cover at processing block 1022. The opening is covered with the opening cover to protect the access point from human touching, dust, and other unnecessary external exposure. Then, at processing block 1024, the WLAN access point is mounted on a surface (e.g., wall, ceiling, board). The mounting is performed such that the access point and the related circuitry remain outside of the surface.

At the decision block 1030, a determination is made as to whether one or more external antennas are needed. If the external antennas are to be added, they are connected and mounted onto the housing using the connectors provided for the antennas at processing block 1032. The process is then completed and ends at terminal block 1034. If the external antennas are not to be added (or if already connected), the process is completed and ends at termination block 1034.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

Similarly, it should be appreciated that in the foregoing description of exemplary embodiments of the invention, various features of the invention are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

While certain exemplary embodiments have been described and shown in the accompanying drawings, it is to be understood that such embodiments are merely illustrative of and not restrictive, and that the embodiments of the present invention are not to be limited to specific constructions and arrangements shown and described, since various other modifications may occur to those ordinarily skilled in the art upon studying this disclosure.

## Claims

1. A device, comprising:
an access point to couple with a local network via a cable extending from the local network to the access point; and
a housing having an interior cavity to house the access point having a size and shape to be disposed within the interior cavity, wherein the housing is capable of being mounted to a surface such that the access point resides outside of the surface.

2. The device of claim 1, wherein the access point comprises one or more of the following: a wired access point and a wireless access point.

3. The device of claim 2, wherein the access point further includes a network access point having one or more of the following: a local area network (LAN), a telephone network, and the Internet.

4. The device of claim 1 or 2, further comprising one or more internal antennas residing inside of the housing, the one or more internal antennas are coupled with the access point.

5. The device of claim 1 or 2, further comprising one or more external antenna connectors disposed on the housing to connect one or more external antennas to the device.

6. The device of claim 1, further comprising one or more jacks to facilitate connection of a client to the local network via a wire connection, the one or more jacks include one or more of the following: an Ethernet jack and a telephone jack.

7. The device of claim 2, further comprising one or more jacks to facilitate connection of a client to the local network, wherein the one or more jacks include an Ethernet jack or a telephone jack and the local network includes a building network.

8. The device of claim 6 or 7 wherein the one or more jacks extend into one more corresponding cables, each of the cables having a plug on an opposite end from an end having the one or more jacks to connect the one or more cables to the local network.

9. The device of claim 8, wherein the one or more jacks include one or more of the following: a registered jack (RJ)-45 jack and an RJ-11 jack, and the plug includes one or more of the following: an RJ-45 plug and an RJ-11 plug.

10. The device according to any of preceding claims, further comprising:
a first cover plate to cover the interior cavity of the housing for use as the wireless access point, the first cover plate is snapped on to an opening of the interior cavity; and
a second cover plate coupled with the one or more jacks to secure the one or more jacks to the device by snapping the second cover plate on to the opening of the interior cavity.

11. The device of any of preceding claims, wherein the housing is capable of being mounted to the surface using one or more of the following: screws, clips, and clamps, wherein the surface includes one or more of the following: a wall, a ceiling, a floor, and a board.

12. A unified access point system, comprising:
a first board having
a wireless access point,
a radio frequency (RF) transceiver coupled with the access point, the transceiver to transmit and receive RF signals, and
one or more internal antennas coupled with the transceiver; and
a second board coupled with the first board, the second board including a power supply module.

13. The system of claim 12, wherein the power supply module comprises a Power over Ethernet (POE)-based IEEE 802.3af power supply module.

14. The system of claim 12 or 13, wherein the transceiver comprises a multi-band transceiver having a multi-band RF receiver and a multi-band RF transmitter, wherein the multi-band includes one or more of the following: a 2.4 GHz band and a 5 GHz band.

15. The system of one of claims 12 to 14, wherein the first board further comprises a modem coupled with the transceiver, the modem includes a baseband modem including one or more of the following: IEEE 802.11a baseband modem, IEEE 802.11b baseband modem, and IEEE 802.11g baseband modem.

16. The system of one of claims 12 to 15, wherein the first board further comprises a high density connector coupled with the transceiver, the connector to bundle one or more of the following: a test point, a general purpose input/output (GPIO), a Joint Test Action Group (JTAG) port, and a console port.

17. The system of one of claims 12 to 16, wherein the first board further comprises one or more external antenna connectors to facilitate connection of one or more external antennas to complement the one or more internal antennas.

18. The system of one of claims 12 to 17, wherein the first board further comprises one or more antenna selection switches to select a combination of one or more of the following: the one or more internal antennas and the one or more external antennas.

19. A method, comprising:
forming a unified access point by placing a wired access port and a wireless access point in an interior cavity of a housing of a unified access point device, wherein the wired access port includes a "pass through" wired access port;
coupling the unified access point to a network; and
mounting the housing to a surface such that the unified access point resides outside of the surface.

20. The method of claim 19, wherein the coupling of the unified access point to the network is performed using one or more of the following: one or more cables, one or more jacks, and one or more plugs.

21. The method of claim 19 or 20, wherein the housing is capable of being mounted to the surface using one or more of the following: screws, clips, and clamps, wherein the surface includes one or more of the following; a wall, a ceiling, a floor, and a board.

22. The method of one of claims 19 to 21, comprises connecting one or more external antennas to one or more connectors disposed on the device to complement one or more internal antennas embedded inside the housing of the device.

23. The method of one of claims 19 to 22, comprises switching between one or more combination of the one or more external antennas and the one or more internal antennas, wherein the switching is performed using an antenna selection switch.
